# EUROPÄISCHE PATENTSCHRIFT

(11) **EP 2 312 725 B1**
(45) Veröffentlichungstag und Bekanntmachung des Hinweises auf die Patenterteilung: **15.03.2017**
(21) Anmeldenummer: 10173350.9
(22) Anmeldetag: 19.08.2010
(51) Int. Cl.: H02J 9/00, G06F 1/30

(54) **Elektrisches Gerät zur Verringerung der Energieaufnahme bei Netzausfall**
Electric device to reduce energy consumption at an interruption of mains
Appareil électrique pour la reduction de la consommation d'énergie pendant une interruption de l'alimentation

(30) Priorität: 13.10.2009 DE 102009049230
(43) Veröffentlichungstag der Anmeldung: 20.04.2011
(73) Patentinhaber: Siemens Aktiengesellschaft, 80333 München (DE)
(72) Erfinder: Reiß, Martin, 76770 Hatzenbühl (DE)

(56) Entgegenhaltungen:
- WO-A1-90/16024
- DE-U1- 9 310 449
- US-A1- 2009 089 514

## Beschreibung

Die Erfindung betrifft ein elektrisches Gerät gemäß dem Oberbegriff des Patentanspruchs.

Aus dem Siemens-Katalog ST PC, Ausgabe 11/2008 ist ein elektrisches Gerät in Form eines so genannten Industrie-PCs bekannt, der für einen Einsatz in der Automatisierungstechnik geeignet ist. Dieser weist gewöhnlich eine "Unterbrechungsfreie Stromversorgung" auf, die aus einer Netzspannung eines Versorgungsnetzes, an welches die Stromversorgung angeschlossen ist, für den Betrieb des Industrie-PCs geeignete Spannungen erzeugt. Die Stromversorgung ist derart ausgebildet, dass Netzausfälle unterbrechungsfrei überbrückt werden, um während eines Pufferbetriebs im Wesentlichen ein gesichertes Herunterfahren von laufenden Anwendungen, z. B. ein Programm zur Steuerung eines technischen Prozesses, und des Betriebssystems zu ermöglichen. Um nach diesem Netzausfall den Stromverbrauch zu verringern und damit die Dauer des Pufferbetriebs (Pufferzeit) zu verlängern, wodurch im Wesentlichen ein sicheres Herunterfahren ohne Verlust von wichtigen Daten gewährleistet wird, schaltet ein Controller Schaltungsteile bzw. Hardwarekomponenten des Industrie-PCs ab. Dazu wertet der Controller zunächst ein durch die Stromversorgung erzeugtes Netzausfall-Signal softwaretechnisch aus, wobei der Controller in regelmäßigen Zeitabständen den Pegel des Netzausfall-Signals erfasst. Anschließend trennt der Controller die für ein sicheres Herunterfahren nicht benötigten Hardwarekomponenten von der Stromversorgung. Aufgrund dessen, dass zunächst eine Auswertung erforderlich ist, ist ein schnelles Abschalten der nicht benötigten Hardwarekomponenten nicht möglich, was sich nachteilig auf die Dauer des Pufferbetriebs bzw. der Pufferzeit auswirkt.

DE 10 2006 021 388 A1 offenbart ein Bildschirmgerät mit einer Anzeigeeinheit und einem Signaleingang zum Anschluss an einen Computer. Es werden Maßnahmen vorgeschlagen, mittels deren eine verbesserte Energiespar- und Schutzfunktion für das Bildschirmgerät ermöglicht wird.

Ein elektrisches Gerät gemäß dem Oberbegriff des Anspruchs ist aus der DE 198 43 147 C1 bekannt.

Der vorliegenden Erfindung liegt die Aufgabe zugrunde, ein elektrisches Gerät der eingangs genannten Art zu schaffen, mit welchem im Falle eines Netzausfalls die Pufferzeit verlängert wird.

Diese Aufgabe wird durch die im kennzeichnenden Teil des Patentanspruchs angegebenen Maßnahmen gelöst.

Vorteilhaft ist, dass ein beschleunigtes Abschalten von nicht benötigten Schaltungsteilen bzw. elektrischen Komponenten im Falle eines Netzausfalls unabhängig von der Software bzw. Firmware des Controllers ermöglicht wird; eine Modifikation der Firmware ist nicht erforderlich und die an sich bekannte Ansteuerung des ersten steuerbaren Schalters im Hinblick auf eine Energie-Verbrauchsoptimierung während des Betriebs des elektrischen Gerätes bleibt erhalten.

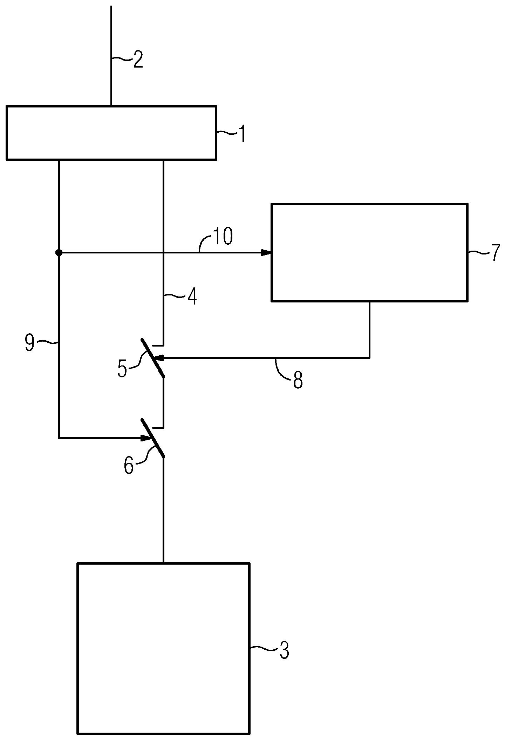

Die Erfindung wird nachfolgend anhand eines Ausführungsbeispiels unter Bezugnahme auf die einzige Figur der Zeichnung näher erläutert. Die Figur der Zeichnung zeigt Bestandteile eines elektrischen Gerätes.

Eine mit 1 bezeichnete Stromversorgung ist über Anschlussleitungen 2 an ein 220V-Versorgungsnetz angeschlossen und erzeugt aus einer dieser Stromversorgung 1 vom Netz zugeführten Spannung die für den Betrieb der elektrischen Komponenten des Gerätes geeigneten Spannungen und Ströme. Das elektrische Gerät ist z. B. als ein an sich bekanntes Notebook ausgebildet, das eine Vielzahl von elektrischen Komponenten, beispielsweise eine Grafik-, eine Netzwerk- und/oder eine Speicherkarte, eine Anzeigeeinheit und/oder weitere für den Betrieb des Notebooks geeignete Hardwareteile aufweist. Im vorliegenden Ausführungsbeispiel versorgt die Stromversorgung 1 eine Hintergrundbeleuchtung 3 einer Anzeigeeinheit des Notebooks über eine Versorgungsleitung 4 mit elektrischer Energie, wobei angenommen wird, dass diese Hintergrundbeleuchtung 3 im Falle eines Ausfalls des Versorgungsnetzes abzuschalten ist, um Energie zur Erhöhung der Pufferzeit der Stromversorgung 1 zu sparen. Während dieser Pufferzeit werden z. B. von einer CPU-Einheit im Rahmen der Abarbeitung eines Anwenderprogramms erzeugte Daten, die zum Zeitpunkt des Netzausfalls noch nicht gesichert wurden, in einen Speicher einer Speicherkarte hinterlegt. Dadurch nimmt das Notebook einen definierten Zustand ein, ehe das Notebook sich nach Ablauf der Pufferzeit ausschaltet.

In einer Normalbetriebsart ist ein erster und ein zweiter steuerbarer Schalter 5, 6 geschlossen, wodurch die Hintergrundbeleuchtung 3 eingeschaltet ist und die Stromversorgung 1 die Hintergrundbeleuchtung 3 mit einer geeigneten Spannung und einem geeigneten Strom versorgt. Für den Fall, dass das eingeschaltete Notebook z. B. für fünf Minuten nicht benutzt wurde, schaltet ein Controller 7 über den ersten steuerbaren Schalter 5 die Hintergrundbeleuchtung 3 ab. Dazu verarbeitet der Controller 7 ein Programm zur Energie-Verbrauchsoptimierung und erzeugt ein Steuersignal, welches der Controller 7 über eine Leitung 8 zum Öffnen des Schalters 5 übermittelt.

Im Falle eines Netzausfalls erzeugt die Stromversorgung 1 ein Netzausfall-Signal, welches die Stromversorgung 1 über eine Leitung 9 dem zweiten steuerbaren Schalter 6 übermittelt, wodurch dieser Schalter 6 sich öffnet. Dadurch ist die Stromversorgung 1 von der Hintergrundbeleuchtung 3 getrennt, wodurch die Energie eines Energiespeichers der Stromversorgung 1 nur für die Hardwarekomponenten zur Verfügung steht, welche zum Sichern der Daten während des Pufferbetriebs der Stromversorgung 1 erforderlich sind. Selbstverständlich können an dem zweiten Schalter 6 nicht nur die Hintergrundbeleuchtung 3 sondern weitere Hardwarekomponenten angeschlossen sein, welche nach einem Netzausfall schnell abgeschaltet werden sollen.

Das von der Stromversorgung 1 erzeugte Netzausfall-Signal übermittelt die Stromversorgung 1 ferner dem Controller 7 über eine Leitung 10, aufgrund dessen der Controller 7 weitere hier nicht dargestellte Hardwarekomponenten über jeweilige erste steuerbare Schalter abschaltet. Im vorliegenden Ausführungsbeispiel ist vorgesehen, dass der Controller 7 aufgrund des zugeführten Netzausfall-Signals den ersten Schalter 5 mittels des über die Leitung 8 übermittelten Steuersignals öffnet, wodurch sichergestellt ist, dass, für den Fall, dass sich der zweite Schalter 6 aufgrund eines Defekts nicht geöffnet hat, die Energiezufuhr unterbrochen wird.

## Patentansprüche

1. Elektrisches Gerät mit einem Controller (7) und mit einer an einem Netz angeschlossenen Stromversorgung (1) zur Versorgung von elektrischen Komponenten (3) des elektrischen Gerätes mit elektrischer Energie, wobei das elektrische Gerät derart ausgebildet ist, dass die Stromversorgung (1) im Falle eines Netzausfalls dem Controller (7) ein Netzausfall-Signal übermittelt, welcher aufgrund des Netzausfall-Signals oder aufgrund einer vorgegebenen Energie-Verbrauchsoptimierung über einen steuerbaren Schalter (5) mindestens eine der elektrischen Komponenten (3) von der Stromversorgung (1) trennt, **dadurch gekennzeichnet, dass** die mindestens eine elektrische Komponente (3) über den steuerbaren Schalter (5) und einen diesem steuerbaren Schalter (5) nachgeschalteten weiteren steuerbaren Schalter (6) angeschlossen ist, welchem die Stromversorgung (1) das Netzausfall-Signal übermittelt, wodurch dieser weitere steuerbare Schalter (6) sich öffnet.

## Claims

1. Electrical device comprising a controller (7) and comprising a power supply (1) connected to a mains and serving for supplying electrical components (3) of the electrical device with electrical energy, wherein the electrical device is designed in such a way that the power supply (1), in the case of a mains failure, communicates a mains failure signal to the controller (7), which disconnects at least one of the electrical components (3) from the power supply line (1) via a controllable switch (5) on account of the mains failure signal or on account of a predefined energy consumption optimization, **characterized in that** the at least one electrical component (3) is connected via the controllable switch (5) and a further controllable switch (6), which is connected downstream of said controllable switch (5) and to which the power supply (1) communicates the mains failure signal, as a result of which said further controllable switch (6) opens.

## Revendications

1. Appareil électrique ayant une unité ( 7 ) de commande et une alimentation ( 1 ) en courant raccordée à un réseau pour alimenter en énergie électrique des composants ( 3 ) électriques de l'appareil électrique, l'appareil électrique étant constitué de manière à ce que l'alimentation ( 1 ) en courant transmette, dans le cas d'une défaillance du réseau, un signal de défaillance du réseau à l'unité ( 7 ) de commande, laquelle, sur la base du signal de défaillance du réseau ou sur la base d'une optimisation donnée à l'avance de consommation d'énergie, sépare, par un interrupteur ( 5 ) pouvant être commandé, au moins l'un des composants ( 3 ) électriques de l'alimentation ( 1 ) en courant, **caractérisé en ce que** le au moins un composant ( 3 ) électrique est raccordé, par l'intermédiaire de l'interrupteur ( 5 ) pouvant être commandé et d'un autre interrupteur ( 6 ) pouvant être commandé et monté en aval de cet interrupteur ( 5 ) pouvant être commandé, autre interrupteur auquel l'alimentation ( 1 ) en courant transmet le signal de défaillance du réseau, grâce à quoi cet autre interrupteur ( 6 ) pouvant être commandé s'ouvre.
